# EUROPÄISCHE PATENTANMELDUNG

(11) **EP 3 483 006 A1**
(43) Veröffentlichungstag der Anmeldung: **15.05.2019**
(21) Anmeldenummer: 18205330.6
(22) Anmeldetag: 09.11.2018
(51) Int. Cl.: B60Q 1/24

(54) **ARBEITSBELEUCHTUNG FÜR EINE ARBEITSMASCHINE UND ARBEITSMASCHINE MIT DER ARBEITSBELEUCHTUNG**

(30) Priorität: 10.11.2017 DE 102017220011
(71) Anmelder: HELLA GmbH & Co. KGaA, 59552 Lippstadt (DE)
(72) Erfinder: AICHINGER-ROSENBERGER, Michael, 3620 Spitz / Donau (AT); FISCHER, Dominik, 1030 Wien (AT); HINGEL, Andreas, 2431 Enzersdorf an der Fischa (AT); JANDRISITS, Christoph, 7534 Olbendorf (AT); BERGER, Gerhard, 7422 Riedlingsdorf (AT); ZETTL, Bernhard, 8230 Hartberg (AT); DERKITS, Christian, 7535 St. Michael im Burgenland (AT); KELLNER, Karlheinz, 3500 Krems (AT); POSNICEK, Thomas, 3485 Haitzendorf (AT)
(74) Vertreter: Patentanwälte Bals & Vogel

(57) **Zusammenfassung**

Die vorliegende Erfindung betrifft eine Arbeitsbeleuchtung (100) für eine Arbeitsmaschine (200) zum Erzeugen eines adaptiven Arbeitslichtes, aufweisend mehrere Leuchtmittel (10), die in Form einer Leuchtmittelmatrix (20) zum Erzeugen des Arbeitslichtes angeordnet sind, sowie wenigstens eine zentrale Einstelleinheit (60, 70, 80) zum separaten Einstellen des Arbeitslichtes der einzelnen Leuchtmittel (10) in der Leuchtmittelmatrix. Die Erfindung betrifft ferner eine Arbeitsmaschine (200) mit einer erfindungsgemäßen Arbeitsbeleuchtung (100).

## Beschreibung

Die vorliegende Erfindung betrifft eine Arbeitsbeleuchtung für eine Arbeitsmaschine zum Erzeugen eines adaptiven Arbeitslichtes. Außerdem betrifft die Erfindung eine Arbeitsmaschine mit der Arbeitsbeleuchtung. Die Erfindung betrifft insbesondere eine Arbeitsbeleuchtung für Arbeitsmaschinen für den landwirtschaftlichen Betrieb wie Traktoren, Mähdrescher oder Harvester.

Aus dem Stand der Technik sind Arbeitsbeleuchtungen mit mehreren Arbeitsscheinwerfern für Arbeitsmaschinen bekannt, die von einem Nutzer der Arbeitsmaschine ganzheitlich eingeschaltet, ausgeschaltet oder gedimmt werden können. Eine solche Arbeitsbeleuchtung kann so beispielsweise bei eintretender Dunkelheit durch den Nutzer eingeschaltet oder zur Vermeidung von Blendung Dritter gedimmt werden. Hinsichtlich der gezielten Ausleuchtung und/oder der Dimmfähigkeit sind die bekannten Arbeitsbeleuchtungen allerdings noch nicht zufriedenstellend.

Aufgabe der vorliegenden Erfindung ist es, der voranstehend beschriebenen Problematik zumindest teilweise Rechnung zu tragen. Insbesondere ist es Aufgabe der vorliegenden Erfindung, eine Arbeitsbeleuchtung für eine Arbeitsmaschine sowie eine Arbeitsmaschine mit der Arbeitsbeleuchtung mit verbesserten Leuchteigenschaften zu schaffen.

Die voranstehende Aufgabe wird durch die Patentansprüche gelöst. Insbesondere wird die voranstehende Aufgabe durch die Arbeitsbeleuchtung gemäß Anspruch 1 sowie die Arbeitsmaschine gemäß Anspruch 11 gelöst. Weitere Vorteile der Erfindung ergeben sich aus den Unteransprüchen, der Beschreibung und den Zeichnungen. Dabei gelten Merkmale und Details, die im Zusammenhang mit der Arbeitsbeleuchtung beschrieben sind, selbstverständlich auch im Zusammenhang mit der erfindungsgemäßen Arbeitsmaschine und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird eine Arbeitsbeleuchtung für eine Arbeitsmaschine zum Erzeugen eines adaptiven Arbeitslichtes zur Verfügung gestellt. Die Arbeitsbeleuchtung weist mehrere Leuchtmittel auf, die in Form einer Leuchtmittelmatrix zum Erzeugen des Arbeitslichtes angeordnet sind. Weiterhin weist die Arbeitsbeleuchtung wenigstens eine zentrale Einstelleinheit zum separaten Einstellen des Arbeitslichtes der einzelnen Leuchtmittel in der Leuchtmittelmatrix auf.

Durch die erfindungsgemäße Matrixbeleuchtung ist eine besonders feine Einstellung der Arbeitsbeleuchtung hinsichtlich einer gewünschten Ausleuchtung sowie der Dimmung möglich. Ein Matrix-Arbeitslicht ermöglicht die explizite Beleuchtung von definierten Bereichen. Diese Bereiche können in Abhängigkeit von verschiedenen Umgebungsbedingungen unterschiedlich eingestellt, also beispielsweise eingeschaltet, ausgeschaltet, oder gedimmt werden. Jedes Leuchtmittel kann in Form eines Arbeitsscheinwerfers ausgestaltet sein. Jeder Arbeitsscheinwerfer kann selbst mehrere Sub-Leuchtmittel aufweisen.

Unter der Einstelleinheit kann eine Einheit zum manuellen und/oder automatischen Einstellen der einzelnen Leuchtmittel verstanden werden. So kann die Einstelleinheit eine Kontrolleinheit zum automaischen Einstellen der einzelnen Leuchtmittel und/oder eine analoge und/oder digitale Bedieneinheit zum manuellen Einstellen der einzelnen Leuchtmittel aufweisen. Die Bedieneinheit kann ein Touch-Display, Knöpfe und/oder Schalter zum Eingeben von manuellen Befehlssignalen zum Einstellen der Leuchtmittel aufweisen.

Die Form der Leuchtmittel ist grundsätzlich innerhalb technischer Grenzen frei wählbar. Die Leuchtmittelmatrix stellt die Basis für erfindungsgemäße adaptive Funktionen dar. Als adaptive Funktionen gelten alle manuellen oder automatisierten Anpassungen des Arbeitslichtes an diverse Umweltfaktoren zur Erhöhung der Effizienz, der Sicherheit und/oder des Komforts eines Nutzers der Arbeitsbeleuchtung sowie aller an seiner Tätigkeit beteiligter sowie unbeteiligter Dritter.

Ferner ist es möglich, dass eine erfindungsgemäße Arbeitsbeleuchtung wenigstens eine Umgebungserkennungseinheit zum Erfassen von Umgebungssignalen und zum Erzeugen wenigstens eines Steuersignals basierend auf den erfassten Umgebungssignalen aufweist und die Einstelleinheit eine Kontrolleinheit zum Steuern und/oder Regeln des Arbeitslichtes der einzelnen Leuchtmittel in der Leuchtmittelmatrix aufweist, wobei die wenigstens eine Kontrolleinheit ausgestaltet ist, das Arbeitslicht von wenigstens einem der Leuchtmittel abhängig von dem wenigstens einen Steuersignal der wenigstens einen Umgebungserkennungseinheit einzustellen.

Dadurch kann auf einfache und zuverlässige Weise eine automatisierte Einstellung der Leuchtmittel durchgeführt werden. Unter einer Steuerung und/oder Regelung kann das Dimmen und/oder das Ein- und/oder Ausschalten einzelner Bereiche bzw. Leuchtmittel verstanden werden.

Das Leuchtmittel kann als kleinste Leuchteinheit der Arbeitsbeleuchtung, beispielsweise als Leuchtpixel der Leuchtmittelmatrix, verstanden werden. Das Leuchtmittel kann jedoch auch, wie vorstehend beschrieben, selbst weitere Sub-Leuchtmittel in Form von Leuchtpixeln in Reihenanordnung oder in Matrixanordnung aufweisen. Eine solche Leuchtmittelmatrix kann mehrere Lichtreihen und mehreren Lichtspalten aufweisen, wobei in jeder Lichtreihe und in jeder Lichtspalte jeweils mehrere Sub-Leuchtmittel angeordnet sind. Die Arbeitsbeleuchtung und entsprechend auch die Leuchtmittelmatrix können wenigstens vier Sub-Leuchtmittel aufweisen, welche in wenigstens zwei Spalten und wenigstens zwei Reihen angeordnet sind. Die Leuchtmittel können jeweils eine Größe von ca. 22°x11° bis 22°x22° Raumwinkel aufweisen.

Die Arbeitsbeleuchtung ist vorzugsweise als mobile Arbeitsbeleuchtung ausgestaltet. Die Arbeitsbeleuchtung ist für den mobilen Arbeitseinsatz, beispielsweise in und/oder an einer entsprechend mobilen Arbeitsmaschine, konfiguriert.

Bei einer erfindungsgemäßen Arbeitsbeleuchtung kann es von Vorteil sein, wenn den Leuchtmitteln oder der Leuchtmittelmatrix eine Steuereinheit, insbesondere eine sogenannte Light Control Unit (LCU) vorgeschaltet ist. Die LCU kann zur Auswertung der erfassten Umgebungssignale konfiguriert und ausgestaltet sein. Die Aufgabe der LCU kann jedoch auch von einer anderen Steuereinheit wie einem sogenannten Body Control Modul (BCM), das mit der LCU in Signalverbindung stehen kann, übernommen werden. Die wenigstens eine Kontrolleinheit entspricht der LCU und/oder dem BCM.

Die einzelnen Leuchtmittel können voneinander abgegrenzt oder hinsichtlich des Arbeitslichtes leicht überlappend ausgeführt werden. Die Anzahl der Leuchtmittel ist grundsätzlich innerhalb technischer Grenzen frei wählbar. Eine sinnvolle Anzahl von Leuchtmitteln kann abhängig von Einsatzzweck und Montagemöglichkeiten gewählt werden.

Darunter, dass das wenigstens eine Steuersignal basierend auf den erfassten Umgebungssignalen erzeugt wird ist zu verstehen, dass das wenigstens eine Steuersignal unter Verwendung der erfassten Umgebungssignale erzeugt wird. Zur Erzeugung bzw. Festlegung des wenigstens einen Steuersignals können also auch noch weitere Signale verwendet bzw. berücksichtigt werden.

Die wenigstens eine Kontrolleinheit ist vorzugsweise ausgestaltet und konfiguriert, das Arbeitslicht von wenigstens einem ersten Leuchtmittel abhängig von dem wenigstens einen Steuersignal der wenigstens einen Umgebungserkennungseinheit unabhängig von wenigstens einem zweiten Leuchtmittel einzustellen. D.h., die Leuchtmittel können unabhängig voneinander eingestellt, also ein- oder ausgeschaltet oder beliebig gedimmt werden.

Die vorliegende Erfindung betrifft eine Arbeitsbeleuchtung für eine Arbeitsmaschine. Eine gattungsgemäße Arbeitsbeleuchtung unterscheidet sich insbesondere von den technischen Gebieten der Straßen oder Wohnraumbeleuchtungen, oder von Beleuchtungen im medizinischen Bereich. Die vorliegende Arbeitsbeleuchtung weist vorzugsweise eine Helligkeit auf, mit welcher keine Straßenzulassung für ein Kraftfahrzeug möglich wäre. Die in Rede stehende Arbeitsbeleuchtung soll insbesondere für mobile Arbeitsmaschinen wie Landmaschinen, Baumaschinen, Baufahrzeuge, Lastfahrzeuge, oder dergleichen geeignet sein. Derartige Arbeitsmaschinen können Traktoren, Mähdrescher, Harvester, Gabelstapler, Bagger, Sattelschlepper, Kräne, oder dergleichen sein. Eine erfindungsgemäße Arbeitsbeleuchtung mit der vorstehend erläuterten automatischen Umfeldkommunikation ist insbesondere auch für autonome Arbeitsmaschinen nutzbar.

Gemäß einer weiteren Ausführungsform der vorliegenden Erfindung ist es möglich, dass bei einer Arbeitsbeleuchtung die Umgebungserkennungseinheit einen Lichtsensor zum Erfassen von Lichtsignalen und zum Erzeugen wenigstens eines Steuersignals basierend auf den erfassten Lichtsignalen aufweist. Durch die Kopplung der Kontrolleinheit mit einem Lichtsensor kann beispielsweise Blendlicht erfasst werden. Basierend auf dem erfassten Blendlicht können nun einzelne Leuchtmittel gezielt gedimmt oder ausgeschaltet werden. Dadurch kann auf einfache und effiziente Weise ein Blendschutz für den Nutzer oder eine Person in der Umgebung des Nutzers der Arbeitsbeleuchtung realisiert werden. Ein erfindungsgemäßer Lichtsensor kann als aktiver oder als passiver Lichtsensor ausgestaltet sein. Ein aktiver Lichtsensor erzeugt eine elektrische Größe durch einfallendes Licht. Ein passiver Lichtsensor verändert seine internen elektrischen Eigenschaften in Abhängigkeit von dem einfallenden Licht. Die aktive oder passive Veränderung des Sensors kann analog und/oder digital interpretiert werden und hat Auswirkungen auf den Strom zum Leuchtmittel. Durch die Erhöhung bzw. Verringerung des Stroms in Abhängigkeit des Sensorsignals wird die Lichtintensität automatisch an beispielsweise reflektiertes Licht angepasst. Je mehr Licht reflektiert wird, desto geringer wird der Strom und desto geringer wird das ausgesendete Licht, bis das Leuchtmittel Niveau erreicht hat, bei dem es zu keiner Blendung mehr kommt. Der als unangenehmen empfundene Schwellwert, ab jenem gedimmt werden soll, ist vom Einsatzzweck abhängig und kann durch Veränderung der Schaltungsparameter angepasst werden.

Weiterhin ist es möglich, dass bei einer Arbeitsbeleuchtung gemäß der vorliegenden Erfindung die Umgebungserkennungseinheit einen Bildsensor, insbesondere eine Kamera, zum Erfassen von Bildsignalen aus der Umgebung der Arbeitsbeleuchtung und zum Erzeugen wenigstens eines Steuersignals basierend auf den erfassten Bildsignalen, aufweist. Der Bildsensor, beispielsweise in Form der Kamera, kann Witterungszustände wie Regen oder Nebel erkennen. Werden Regen und/oder Nebel erkannt, kann basierend darauf ein entsprechendes Steuersignal erstellt werden, durch welches das Arbeitslicht den aktuellen Bedürfnissen auf einfache Weise angepasst werden kann.

Zudem ist es bei einer erfindungsgemäßen Arbeitsbeleuchtung möglich, dass die Umgebungserkennungseinheit eine Objekterkennungseinheit zum Erfassen von wenigstens einem Objekt in der Umgebung der Arbeitsbeleuchtung und zum Erzeugen wenigstens eines Steuersignals basierend auf dem erfassten wenigstens einen Objekt, aufweist. Die Objekterkennungseinheit kann für die Objekterkennung eine Ultraschall- und/oder eine Radareinheit aufweisen. Durch die gezielte Objekterkennung kann das Arbeitslicht zum Beispiel stark erhöht werden, sobald ein Objekt erkannt wird, dass an der Arbeitsmaschine Schaden anrichten könnte und/oder das durch die Arbeitsmaschine selbst beschädigt werden könnte. Bei simultanen Arbeiten im landwirtschaftlichen Umfeld kann durch die Objekterkennungseinheit ferner Blendung durch Arbeitsscheinwerfer anderer Teilnehmer auf dem Feld verhindert werden, indem die Objekterkennung andere Fahrzeuge erkennt und über die Kontrolleinheit den oder die entsprechenden Leuchtmittel dimmt oder ausschaltet.

Bei einer erfindungsgemäßen Ausgestaltungsvariante kann bei einer Arbeitsbeleuchtung das wenigstens eine Leuchtmittel zum Erzeugen von Arbeitslicht mit wenigstens 2.000 Lumen ausgestaltet sein. D.h., das Leuchtmittel ist in der Lage, Arbeitslicht mit einem Lichtstrom von wenigstens 2.000 Lumen zu erzeugen. Dadurch unterscheidet sich die Arbeitsbeleuchtung grundlegend von Beleuchtungssystemen, die beispielsweise im Straßenverkehr, in der allgemeinen Medizin oder im Wohnbereich Anwendung finden. Grundsätzlich ist es sogar möglich, dass jedes der Leuchtmittel einen Lichtstrom von wenigstens 2.000 Lumen aufweist.

Weiterhin ist es möglich, dass bei einer Arbeitsbeleuchtung gemäß der Erfindung mehrere Leuchtmittel zum Erzeugen von Arbeitslicht mit jeweils wenigstens 2.000 Lumen angeordnet sind. Das Arbeitslicht der Arbeitsbeleuchtung kann dadurch auf beispielsweise 4.000 Lumen , 6.000 Lumen oder auch über 10.000 Lumen erhöht werden. Ein solcher Lichtstrom kann bei gattungsgemäßen Arbeitsmaschinen insbesondere bei schwierigen Witterungs- und/oder Umgebungsverhältnissen darüber entscheiden, ob die Arbeit zufriedenstellen erledigt werden kann oder nicht.

Darüber hinaus ist es möglich, dass bei einer Arbeitsbeleuchtung gemäß der vorliegenden Erfindung ein Eye-Tracking-System zum Erfassen von Blickinformationen eines Nutzers der Arbeitsbeleuchtung und zum Erzeugen wenigstens eines Eye-Tracking-Steuersignals basierend auf den erfassten Blickinformationen angeordnet ist, wobei die wenigstens eine Kontrolleinheit ausgestaltet ist, das Arbeitslicht von wenigstens einem der Leuchtmittel abhängig von dem wenigstens einen Steuersignal der wenigstens einen Umgebungserkennungseinheit sowie abhängig von dem wenigstens einen Eye-Tracking-Steuersignal von dem Eye-Tracking-System einzustellen. Durch die Kopplung der Kontrolleinheit mit dem Eye-Tracking-System kann das Arbeitslicht gezielt auf die Bedürfnisse eines Nutzers der Arbeitsbeleuchtung eingestellt werden. Das Eye-Tracking-System kann in Form eines Headsets ausgestaltet sein, das der Nutzer wie eine Art Brille aufsetzen kann. Dadurch kann die Augenbewegung des Nutzers besonders genau erfasst werden. Das Eye-Tracking-System kann aber auch dezentral vom Nutzer, beispielsweise in einer Fahrerkabine der Arbeitsmaschine im Blickfeld des Nutzers, angeordnet sein. Dadurch kann die uneingeschränkte Bewegungs- und Sichtfreiheit für den Nutzer gewährleistet werden.

Bei einer erfindungsgemäßen Arbeitsbeleuchtung ist es ferner möglich, dass ein Head-Tracking-System zum Erfassen von Blickinformationen eines Nutzers der Arbeitsbeleuchtung und zum Erzeugen wenigstens eines Head-Tracking-Steuersignals, basierend auf den erfassten Blickinformationen, angeordnet ist, wobei die wenigstens eine Kontrolleinheit ausgestaltet ist, das Arbeitslicht von wenigstens einem der Leuchtmittel abhängig von dem wenigstens einen Steuersignal der wenigstens einen Umgebungserkennungseinheit sowie abhängig von dem wenigstens einen Head-Tracking-Steuersignal von dem Head-Tracking-System einzustellen. Durch das Head-Tracking-System können ebenfalls Blickinformationen des Nutzers erfasst werden. Im Vergleich zum Eye-Tracking-System können die Blickinformationen besonders einfach und kostengünstig, beispielsweise mittels einer einfachen Kamera, die beispielsweise im Armaturenbereich der Arbeitsmaschine bzw. in der Kabine installiert ist, ermittelt werden.

Von weiterem Vorteil kann es sein, wenn bei einer erfindungsgemäßen Arbeitsbeleuchtung die wenigstens eine Umgebungserkennungseinheit an dem wenigstens einen Leuchtmittel oder in unmittelbarer Nähe zu dem wenigstens einen Leuchtmittel angeordnet ist. Das Leuchtmittel kann mithin einen integrierten Lichtsensor bzw. Lichtreferenzsensor aufweisen. Insbesondere können mehrere Leuchtmittel der Arbeitsbeleuchtung mit einem Lichtsensor ausgestattet sein bzw. an mehreren Leuchtmitteln kann jeweils wenigstens ein Lichtsensor angeordnet sein. Durch die Positionierung der Umgebungserkennungseinheit an dem wenigstens einen Leuchtmittel kann das wenigstens eine Leuchtmittel gegenüber Dritten gezielt wunschgemäß eingestellt werden.

Gemäß einem weiteren Aspekt der vorliegenden Erfindung wird eine Arbeitsmaschine mit einer wie vorstehend im Detail beschriebenen Arbeitsbeleuchtung zur Verfügung gestellt. Die Arbeitsmaschine weist eine Kabine bzw. eine Arbeitskabine für einen Nutzer der Arbeitsbeleuchtung und somit auch der Arbeitsmaschine auf. Damit bringt eine erfindungsgemäße Arbeitsmaschine die gleichen Vorteile mit sich, wie sie ausführlich mit Bezug auf die erfindungsgemäße Arbeitsbeleuchtung beschrieben worden sind. Wie vorstehend bereits erwähnt, ist unter der Arbeitsmaschine insbesondere eine Landwirtschaftsmaschine, ein Baumaschine, ein Baufahrzeug, ein Lastfahrzeug, oder dergleichen zu verstehen. Eine solche Maschine kann ein Traktor, ein Mähdrescher, ein Gabelstapler, ein Bagger, ein Sattelschlepper, ein Kran, ein Harvester, oder dergleichen sein. Unter der Kabine ist eine Fahrer- bzw. Nutzerkabine zu verstehen, in welcher sich der Nutzer oder Fahrer der Arbeitsmaschine befindet, während er die Arbeitsmaschine bedient. Die Kabine kann eine offene oder eine geschlossene bzw. verschließbare Kabine sein. Grundsätzlich ist unter der Kabine ein abgegrenzter oder vordefinierter Ort oder ein entsprechender Raum zu verstehen, an welchem sich eine Person während der Nutzung der Arbeitsmaschine an oder in derselben aufhält.

Zudem kann bei einer erfindungsgemäßen Arbeitsmaschine die zentrale Einstelleinheit eine Betätigungseinheit zur manuellen, separaten Einstellung des Arbeitslichtes der einzelnen Leuchtmittel aufweist. Die manuelle Bedieneinheit bzw. eine Einheit zur manuellen Bedienung bzw. Betätigung der Leuchtmittel bietet dem Nutzer eine besonders einfache Möglichkeit, die einzelnen Leuchtmittel, beispielsweise in Form von Scheinwerfern, nach Bedarf einzustellen. Die manuelle Bedieneinheit kann ein Touch-Display, Knöpfe und/oder Schalter zum manuellen Bedienen der einzelnen Leuchtmittel aufweisen. Die Bedieneinheit ist vorzugsweise in der Kabine, insbesondere in einem Armaturenbereich in der Kabine, angeordnet. In diesem Bereich ist die Bedieneinheit für den Nutzer leicht zugänglich und entsprechend leicht zu bedienen.

Bei einer weiteren Ausgestaltungsvariante der vorliegenden Erfindung ist es möglich, dass die wenigstens eine Umgebungserkennungseinheit in der Kabine, insbesondere im Sichtbereich und auf Augenhöhe eines sich in der Kabine befindenden Nutzers, angeordnet ist. Dadurch kann das Arbeitslicht auf einfache und zuverlässige Weise gezielt auf die Bedürfnisse des Nutzers eingestellt werden. Vorzugsweise ist die wenigstens eine Umgebungserkennungseinheit derart in der Kabine angeordnet, dass sie sich in der Nähe der Augen des Nutzers, beispielsweise durchschnittlich näher als 50 cm an den Augen des Nutzers, befindet. Dabei ist von einer Arbeitsposition, insbesondere einer Sitzposition, des Nutzers auszugehen.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine Arbeitsmaschine mit einer Arbeitsbeleuchtung gemäß einer erfindungsgemäßen Ausführungsform,
- Fig. 2: ein erfindungsgemäßes Leuchtmittel, und
- Fig. 3: eine von einer Arbeitsmaschine getrennt dargestellte Arbeitsbeleuchtung gemäß einer erfindungsgemäßen Ausführungsform.

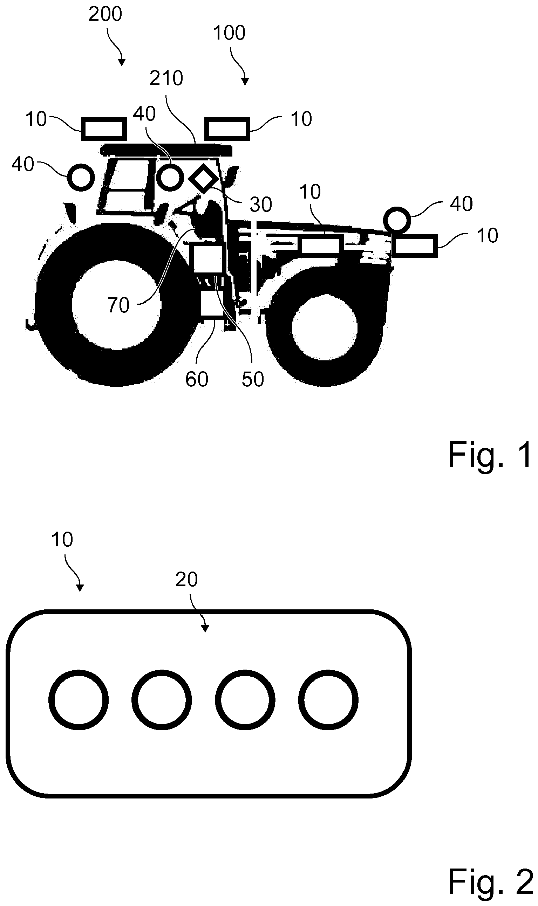

Elemente mit gleicher Funktion und Wirkungsweise sind in den Figuren 1 bis 3 jeweils mit denselben Bezugszeichen versehen.

Fig. 1 zeigt eine Arbeitsmaschine 200 in Form eines Traktors mit einer daran montierten Arbeitsbeleuchtung 100 zum Erzeugen eines adaptiven Arbeitslichtes. Die Arbeitsmaschine 200 weist eine Kabine 210 für einen Nutzer der Arbeitsmaschine 200 sowie der Arbeitsbeleuchtung 100 auf. Wie in Fig. 1 dargestellt, ist in der Kabine 210 der Arbeitsmaschine 200 eine Umgebungserkennungseinheit 40 im Sichtbereich und auf Augenhöhe eines sich in der Kabine 210 befindenden Nutzers (nicht dargestellt) angeordnet. Weitere Umgebungserkennungseinheiten 40 sind in der Nähe der Leuchtmittel 10 angeordnet.

Die in Fig. 1 dargestellte Arbeitsbeleuchtung 100 der Arbeitsmaschine 200 weist acht (vier dargestellte) Leuchtmittel zum Erzeugen des Arbeitslichtes auf. Die Arbeitsbeleuchtung 100 weist ferner sechs (drei dargestellte) Umgebungserkennungseinheiten 40 auf. Die Umgebungserkennungseinheiten 40 weisen jeweils einen Lichtsensor zum Erfassen von Lichtsignalen und zum Erzeugen eines Steuersignals basierend auf den erfassten Lichtsignalen auf. Die Arbeitsbeleuchtung 100 weist ferner eine Einstelleinheit 70 in Form einer manuellen Bedieneinheit, eine Einstelleinheit 50 mit einer Kontrolleinheit in Form einer LCU sowie eine Einstelleinheit 60 mit einer Kontrolleinheit in Form eines BCM zum Steuern und/oder Regeln des Arbeitslichtes der einzelnen Leuchtmittel 10 auf, wobei eine LCU ausgestaltet ist, das Arbeitslicht von wenigstens einem der Leuchtmittel 10 abhängig von den verschiedenen Steuersignalen der Umgebungserkennungseinheit einzustellen. Neben den Lichtsensoren weisen die Umgebungserkennungseinheiten 40 einen Bildsensor zum Erfassen von Bildsignalen aus der Umgebung der Arbeitsbeleuchtung 100 und zum Erzeugen eines Steuersignals basierend auf den erfassten Bildsignalen, sowie eine Objekterkennungseinheit zum Erfassen von wenigstens einem Objekt in der Umgebung der Arbeitsbeleuchtung 100 und zum Erzeugen eines Steuersignals basierend auf dem erfassten wenigstens einen Objekt, auf.

Die Leuchtmittel 10 sind jeweils zum Erzeugen von Arbeitslicht mit ca. 2.000 Lumen ausgestaltet. In der Kabine 210 ist ferner ein Eye-Tracking-System 30 zum Erfassen von Blickinformationen eines Nutzers der Arbeitsbeleuchtung 100 und zum Erzeugen eines Eye-Tracking-Steuersignals basierend auf den erfassten Blickinformationen angeordnet. Zusätzlich oder alternativ zum Eye-Tracking-System 30 kann in der Kabine 210 auch ein Head-Tracking-System mit einer dem Eye-Tracking-System entsprechenden Funktionsweise angeordnet sein. Die LCU ist demnach dahingehend ausgestaltet, dass Arbeitslicht von wenigstens einem der Leuchtmittel 10 abhängig von den Steuersignalen der Umgebungserkennungseinheit 40 sowie abhängig vom Eye-Tracking-Steuersignal des Eye-Tracking-Systems 30 einzustellen.

In Fig. 2 ist ein in Fig. 1 gezeigtes Leuchtmittel 10 vergrößert dargestellt. Wie in Fig. 2 zu erkennen, weist das Leuchtmittel 10 vier Sub-Leuchtmittel in Form von vier LEDs auf.

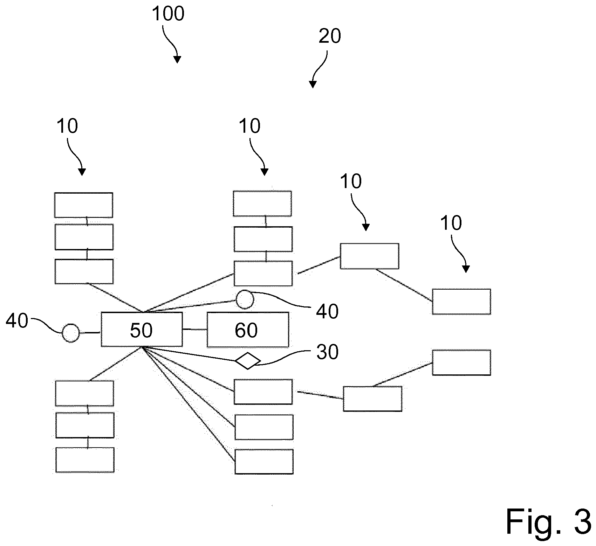

In Fig. 3 ist eine Arbeitsbeleuchtung 100 losgelöst von einer Arbeitsmaschine 200 dargestellt. Die in Fig. 3 dargestellte Arbeitsbeleuchtung weist 16 Leuchtmittel 10 auf, die mit der Kontrolleinheit in Form der LCU matrixförmig in Signalverbindung stehen. D.h., unter der in Fig. 3 dargestellten Anordnung der Leuchtmittel 10 ist eine Matrixanordnung zu verstehen. Die LCU steht mit der Kontrolleinheit in Form des BCM in Signalverbindung. Weitersthin stehen mit der LCU zwei Umgebungserkennungseinheiten 40 in Form von Lichtsensoren 40 sowie ein Eye-Tracking-System 30 in Signalverbindung.

Die Erfindung lässt neben den dargestellten Ausführungsformen weitere Gestaltungsgrundsätze zu. D.h., die Erfindung soll nicht auf die in den Figuren dargestellten Ausführungsformen beschränkt betrachtet werden.

### Bezugszeichenliste

- 10: Leuchtmittel
- 20: Leuchtmittelmatrix
- 30: Eye-Tracking-System
- 40: Umgebungserkennungseinheit
- 50: Einstelleinheit (LCU, Kontrolleinheit)
- 60: Einstelleinheit (BCM, Kontrolleinheit)
- 70: Einstelleinheit (manuelle Bedieneinheit)
- 100: Arbeitsbeleuchtung

## Patentansprüche

1. Arbeitsbeleuchtung (100) für eine Arbeitsmaschine (200) zum Erzeugen eines adaptiven Arbeitslichtes, aufweisend mehrere Leuchtmittel (10), die in Form einer Leuchtmittelmatrix (20) zum Erzeugen des Arbeitslichtes angeordnet sind, sowie wenigstens eine zentrale Einstelleinheit (50, 60, 70) zum separaten Einstellen des Arbeitslichtes der einzelnen Leuchtmittel (10) in der Leuchtmittelmatrix.

2. Arbeitsbeleuchtung (100) nach Anspruch 1,
**dadurch gekennzeichnet, dass**
wenigstens eine Umgebungserkennungseinheit (40) zum Erfassen von Umgebungssignalen und zum Erzeugen wenigstens eines Steuersignals basierend auf den erfassten Umgebungssignalen angeordnet ist, und die Einstelleinheit (50, 60) eine Kontrolleinheit zum Steuern und/oder Regeln des Arbeitslichtes der einzelnen Leuchtmittel (10) in der Leuchtmittelmatrix aufweist, wobei die wenigstens eine Kontrolleinheit ausgestaltet ist, das Arbeitslicht von wenigstens einem der Leuchtmittel (10) abhängig von dem wenigstens einen Steuersignal der wenigstens einen Umgebungserkennungseinheit (40) einzustellen.

3. Arbeitsbeleuchtung (100) nach Anspruch 2,
**dadurch gekennzeichnet, dass**
die Umgebungserkennungseinheit (40) einen Lichtsensor zum Erfassen von Lichtsignalen und zum Erzeugen wenigstens eines Steuersignals basierend auf den erfassten Lichtsignalen aufweist.

4. Arbeitsbeleuchtung (100) nach einem der Ansprüche 2 bis 3,
**dadurch gekennzeichnet, dass**
die Umgebungserkennungseinheit (40) einen Bildsensor, insbesondere eine Kamera, zum Erfassen von Bildsignalen aus der Umgebung der Arbeitsbeleuchtung (100) und zum Erzeugen wenigstens eines Steuersignals basierend auf den erfassten Bildsignalen, aufweist.

5. Arbeitsbeleuchtung (100) nach einem der Ansprüche 2 bis 4,
**dadurch gekennzeichnet, dass**
die Umgebungserkennungseinheit (40) eine Objekterkennungseinheit zum Erfassen von wenigstens einem Objekt in der Umgebung der Arbeitsbeleuchtung (100) und zum Erzeugen wenigstens eines Steuersignals basierend auf dem erfassten wenigstens einen Objekt, aufweist.

6. Arbeitsbeleuchtung (100) nach einem der voranstehenden Ansprüche, **dadurch gekennzeichnet, dass**
wenigstens eines der Leuchtmittel (10) zum Erzeugen von Arbeitslicht mit wenigstens 2.000 Lumen ausgestaltet ist.

7. Arbeitsbeleuchtung (100) nach einem der voranstehenden Ansprüche, **dadurch gekennzeichnet, dass**
mehrere Leuchtmittel (10) zum Erzeugen von Arbeitslicht mit jeweils wenigstens 2.000 Lumen angeordnet sind.

8. Arbeitsbeleuchtung (100) nach einem der Ansprüche 2 bis 7,
**dadurch gekennzeichnet, dass**
ein Eye-Tracking-System (30) zum Erfassen von Blickinformationen eines Nutzers der Arbeitsbeleuchtung (100) und zum Erzeugen wenigstens eines Eye-Tracking-Steuersignals, basierend auf den erfassten Blickinformationen, angeordnet ist, wobei die wenigstens eine Kontrolleinheit ausgestaltet ist, das Arbeitslicht von wenigstens einem der Leuchtmittel (10) abhängig von dem wenigstens einen Steuersignal der wenigstens einen Umgebungserkennungseinheit (40) sowie abhängig von dem wenigstens einen Eye-Tracking-Steuersignal von dem Eye-Tracking-System (30) einzustellen.

9. Arbeitsbeleuchtung (100) nach einem der Ansprüche 2 bis 8,
**dadurch gekennzeichnet, dass**
ein Head-Tracking-System zum Erfassen von Blickinformationen eines Nutzers der Arbeitsbeleuchtung (100) und zum Erzeugen wenigstens eines Head-Tracking-Steuersignals, basierend auf den erfassten Blickinformationen, angeordnet ist, wobei die wenigstens eine Kontrolleinheit ausgestaltet ist, das Arbeitslicht von wenigstens einem der Leuchtmittel (10) abhängig von dem wenigstens einen Steuersignal der wenigstens einen Umgebungserkennungseinheit (40) sowie abhängig von dem wenigstens einen Head-Tracking-Steuersignal von dem Head-Tracking-System einzustellen.

10. Arbeitsbeleuchtung (100) nach einem der Ansprüche 2 bis 9,
**dadurch gekennzeichnet, dass**
die wenigstens eine Umgebungserkennungseinheit (40) an dem wenigstens einen Leuchtmittel (10) oder in unmittelbarer Nähe zu dem wenigstens einen Leuchtmittel (10) angeordnet ist.

11. Arbeitsmaschine (200) mit einer Arbeitsbeleuchtung (100) nach einem der voranstehenden Ansprüche, aufweisend eine Kabine (210) für einen Nutzer der Arbeitsbeleuchtung (100).

12. Arbeitsmaschine (200) nach Anspruch 11,
**dadurch gekennzeichnet, dass**
die zentrale Einstelleinheit (80) eine Bedieneinheit zur manuellen, separaten Einstellung des Arbeitslichtes der einzelnen Leuchtmittel (10) aufweist.

13. Arbeitsmaschine (200) nach Anspruch 12,
**dadurch gekennzeichnet, dass**
die Bedieneinheit in der Kabine (210) angeordnet ist.

14. Arbeitsmaschine (200) nach einem der Ansprüche 11 bis 13,
**dadurch gekennzeichnet, dass**
die wenigstens eine Umgebungserkennungseinheit (40) in der Kabine (210), insbesondere im Sichtbereich und auf Augenhöhe eines sich in der Kabine (210) befindenden Nutzers, angeordnet ist.
